# EUROPÄISCHE PATENTSCHRIFT

(11) **EP 0 987 805 B1**
(45) Veröffentlichungstag und Bekanntmachung des Hinweises auf die Patenterteilung: **27.07.2005**
(21) Anmeldenummer: 98117742.1
(22) Anmeldetag: 18.09.1998
(51) Int. Cl.: H02H 3/33

(54) **Fehlerstromschutzeinrichtung mit bipolarer Signalaufbereitung**
Earth fault protection device with bipolar signal-processing circuit
Dispositif de protection contre les courants de défaut avec traitement bipolaire de signaux

(43) Veröffentlichungstag der Anmeldung: 22.03.2000
(73) Patentinhaber: SIEMENS AKTIENGESELLSCHAFT, 80333 München (DE)
(72) Erfinder: Bauer, Bernhard, 93053 Regensburg (DE)

(56) Entgegenhaltungen:
- EP-A- 0 140 418
- GB-A- 2 170 367

## Beschreibung

Die Erfindung bezieht sich auf eine Fehlerstrom-Schutzeinrichtung mit einem Summenstromwandler, dem sekundärseitig über eine Signalaufbereitungs-Schaltung ein Auslöserelais zur Betätigung eines Schalters im angeschlossenen Leiternetz nachgeschaltet ist. Unter Fehlerstrom-Schutzeinrichtung wird insbesondere ein Differenzstrom-Schutzschalter (DI-Schutzschalter) oder Differenzstrom-Zusatz verstanden.

Eine derartige Fehlerstrom-Schutzeinrichtung dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehlerstrom (oder auch Differenzstrom) fließt dann über die Person als Körperstrom gegen Erde ab. Die zum Schutz gegen gefährliche Körperströme eingesetzte Schutzeinrichtung trennt bei Überschreiten des sogenannten Bemessungsfehlerstromes den betroffenen Stromkreis sicher und schnell vom Netz.

Der Aufbau bekannter Fehlerstrom-Schutzeinrichtungen ist beispielsweise aus der "etz", Band 107 (1986), Heft 20, Seiten 938 bis 945, bekannt. Dort sind insbesondere in den Bildern 1 bis 3 Prinzipschaltbilder und Funktionsprinzipien eines Fehlerstrom-Schutzschalters (FI-Schutzschalter) und eines Differenzstrom-Schutzschalters (DI-Schutzschalter) dargestellt. Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Falle eines Fehlerstroms ein Spannungssignal induziert, das ein Auslöserelais (oder auch Auslöser) ansteuert. Das Auslöserelais betätigt daraufhin eine Schaltmechanik, mittels derer die Leiter des Leiternetzes getrennt werden. Dabei ist der FI-Schutzschalter ausschließlich induktiv über den Summenstromwandler an das Leiternetz angekoppelt. Er entnimmt somit die zur Auslösung notwendige Energie netzspannungsunabhängig aus dem Fehlerstrom selbst. Dagegen wird beim DI-Schutzschalter zur Auslösung der Schaltmechanik Hilfsenergie zur Verstärkung des Spannungssignals aus dem Leiternetz zugeführt.

Häufig ist bei einem derartigen DI-Schutzschalter (oder DI-Zusatz) der sogenannte Nennfehlerstrom einstellbar. Der Nennfehlerstrom ist ein Maß für die Auslöseempfindlichkeit des DI-Schutzschalters und legt insbesondere fest, bei welchen Bemessungsfehlerströmen unter verschiedenen Betriebsbedingungen des DI-Schutzschalters eine Auslösung zu erfolgen hat. Der Nennfehlerstrom wird üblicherweise dadurch variiert, dass einer das Spannungssignal gleichrichtenden und verstärkenden Signalaufbereitungs-Schaltung eine veränderliche Bürde, d.h. ein zur Sekundärwicklung des Summenstromwandlers parallel geschalteter Widerstand, zugeordnet wird. Dabei ist der Nennfehlerstrom umso größer, je niederohmiger die Bürde gewählt ist. Insbesondere bei DI-Schutzschaltern, deren Nennfehlerstrom über einen sehr großen Bereich einstellbar ist, wie z.B. von 30 mA bis 3 A oder von 300 mA bis 30 A, arbeitet der Summenstromwandler bei eingestelltem Maximalwert des Nennfehlerstroms quasi im Kurzschlussbetrieb, während beim Minimalwert annähernd Leerlaufbetrieb vorliegt. Aufgrund dieser gegensätzlichen Betriebsbedingungen ist bei einem DI-Schutzschalter die Erzielung eines guten Auslöseverhaltens über den gesamten Nennfehlerstrombereich problematisch. Insbesondere bei pulsierenden Gleichfehlerströmen und einem hohen Wert des Nennfehlerstroms wird häufig nur eine vergleichsweise schlechte Auslösecharakteristik erzielt.

Aus der Druckschrift GB 2 170 367 A ist eine gattungsgemäße Fehlerstrom-Schutzeinrichtung mit einem Summenstromwandler, dem sekundärseitig über eine Signalaufbereitungs-Schaltung ein Auslöserelais zur Betätigung eines Schalters im angeschlossenen Leiternetz nachgeschaltet ist, bekannt. Die Signalverarbeitungs-Schaltung richtet eine von der Sekundärwicklung des Summenstromwandlers angelegte Eingangsspannung bipolar gleich und verstärkt sie. Eine gemeinsame Referenzspannung wird der Sekundärwicklung und der Signalaufbereitungs-Schaltung zugeführt. Die Signalaufbereitungs-Schaltung umfasst ferner einen aus zwei gekoppelten Operationsverstärkern aufgebauten aktiven Vollweggleichrichter.

Der Erfindung liegt die Aufgabe zugrunde, eine Fehlerstrom-Schutzeinrichtung, insbesondere einen DI-Schalter oder DI-Zusatz, anzugeben, deren Auslöseverhalten insbesondere im hohen Nennfehlerstrombereich besonders gut ist.

Diese Aufgabe wird erfindungsgemäß gelöst durch die Merkmale des Anspruchs 1. Danach ist eine Signalaufbereitungs-Schaltung vorgesehen, die eine von der Sekundärwicklung des Summenstromwandlers angelegte Eingangsspannung bipolar gleichrichtet und verstärkt. Die Signalaufbereitungs-Schaltung umfasst einen aktiven Vollweggleichrichter. Ein derartiger Vollweggleichrichter ist in z.B. "Halbleiter-Schaltungstechnik", U. Tietze, Ch. Schenk, 6. Auflage, Springer-Verlag (1983),(nachfolgend kurz als Tietze/Schenk bezeichnet) auf Seite 787 beschrieben. Ein Vorteil des zwei in Reihe geschaltete Operationsverstärker aufweisenden Vollweggleichrichters - z.B. gegenüber herkömmlichen Diodengleichrichtern - liegt darin, dass eine Gleichrichtung von Signalen ermöglicht ist, deren Betrag deutlich unterhalb von herkömmlichen Diodendurchlassspannungen liegt. Durch die Anbindung der Sekundärwicklung und der Signalaufbereitungs-Schaltung an eine betragsmäßig zwischen Massepotential und einer Betriebsspannung liegende Referenzspannung wird auf besonders einfache Weise die polaritätsunabhängige Verarbeitung von Signalen der Eingangsspannung ermöglicht. Auf diese Weise ist die Bereitstellung einer lediglich unipolaren Betriebsspannung erforderlich.

Die Erfindung geht von der Erkenntnis aus, dass die durch einen Fehlerstrom hervorgerufene Eingangsspannung insbesondere hinsichtlich ihrer Form von dem eingestellten Widerstandsbetrag der Bürde abhängt. Während z.B. im Falle eines pulsierenden Gleichfehlerstroms bei hochohmiger Bürde eine bipolare Eingangsspannung erzeugt wird, ist die von demselben Fehlerstrom hervorgerufene Eingangsspannung bei einer niederohmigen Bürde annähernd unipolar. Um eine solche unipolare Eingangsspannung unabhängig von ihrer (positiven oder negativen) Polarität sicher detektieren zu können, ist eine Signalaufbereitungs-Schaltung vorteilhaft, die bezüglich beider Polaritäten etwa gleich empfindlich ist.

Die Auslösecharakteristik einer bipolaren Signalaufbereitungs-Schaltung ist vorteilhafterweise weitgehend unabhängig vom Widerstandswert der eingestellten Bürde, und somit weitgehend unabhängig vom eingestellten Nennfehlerstrom. Insbesondere wird bei einem pulsierenden Gleichfehlerstrom und einem hohen Nennfehlerstrom ein besonders gutes Auslöseverhalten erzielt.

Mittels einer dem Vollweggleichrichter nachgeschalteten Verstärkerschaltung mit einstellbaren Verstärkungsfaktor wird vorteilhafterweise ein Verstärkerabgleich mit lediglich einem Potentiometer ermöglicht. Der Verstärkerabgleich ist zweckmäßigerweise derart ausgeführt, dass bei einem Ausfall des Potentiometerschleifers durch Unterbrechung der Verstärkungsfaktor nur geringfügig, insbesondere um weniger als einen Faktor 1,5, ansteigt. Der DI-Schutzschalter weist somit bei ausgefallenem Potentiometerschleifer eine erhöhte Empfindlichkeit auf. Der Ausfall des Potentiometerschleifers stellt somit keinen Sicherheitsverlust im Hinblick auf das Auslöseverhalten des DI-Schutzschalters dar. Gleichzeitig ist durch die Beschränkung des Verstärkungsfaktoranstiegs die Gefahr einer fehlerhaften Auslösung infolge des Ausfalls des Potentiometerschleifers weitgehend vermieden.

Die nachgeschaltete Verstärkerschaltung kann dabei alternativ invertierend oder nicht-invertierend ausgeführt sein. Beide Ausführungen sind in Tietze/Schenk auf Seite 132ff bzw. Seite 135ff beschrieben.

Zur Bereitstellung der Referenzspannung ist zweckmäßigerweise ein Versorgungsmodul in Form eines nicht-invertierenden Verstärkers vorgesehen. In einer Ausführung des Versorgungsmoduls als Spannungsfolger ist mit geringem schaltungstechnischen Aufwand eine genaue Einstellung der Referenzspannung möglich. Zur Erzielung einer besonders hohen Konstanz der Referenzspannung kann alternativ ein nicht-invertierender Verstärker mit einem den Betrag 1 übersteigenden Verstärkungsfaktor als Versorgungsmodul vorgesehen sein. Besonders vorteilhaft ist hierbei eine Ausführung, gemäß welcher dieser nicht-invertierende Verstärker frequenzgangkompensiert ist.

Zur Verbesserung der Stoßstromfestigkeit des DI-Schutzschalters ist im Sekundärstromkreis ein Überspannungsschutz beispielsweise in Form zweier antiparallel geschalteter Dioden vorgesehen. In einer besonders vorteilhaften Dimensionierung des Überspannungsschutzes, wonach das Produkt aus der Stoßansprechspannung des Überspannungsschutzes und dem Verstärkungsfaktor des Vollweggleichrichters die maximale Ausgangsaussteuerbarkeit des verwendeten Operationsverstärker-Typs nicht übersteigt, ist ein Betrieb des Vollweggleichrichters in Sättigung wirkungsvoll vermieden. Um ein Absinken des Verstärkungsfaktors des Vollweggleichrichters, insbesondere mit einem hochohmigen Eingangswiderstand von mindestens 10 kΩ, bei hohen Umgebungstemperaturen zu vermeiden, sind Gleichrichter-Dioden mit einem niedrigen Sperrstrom von Ir ≤ 200 nA bei einer Bauteiltemperatur von bis zu T = 100 °C vorteilhaft.

Die mit der Erfindung erzielten Vorteile bestehen insbesondere darin, dass durch eine bipolare Gleichrichtung und Verstärkung einer von der Sekundärwicklung eines Summenstromwandlers angelegten Eingangsspannung eine besonders zuverlässige Auslösung insbesondere bei einem pulsierenden Gleichfehlerstrom und bei einem hohen Nennfehlerstrom erreicht wird. Durch Serienschaltung eines aktiven Vollweggleichrichters mit einer invertierenden oder nicht-invertierenden Verstärkerschaltung ist eine Signalaufbereitungs-Schaltung realisiert, bei der ein Verstärkungsfaktorabgleich mittels eines einzigen Potentiometers ermöglicht ist. Dabei ist auch bei Ausfall des Potentiometerschleifers durch Unterbrechung ein sicherer Betrieb des DI-Schutzschalters gewährleistet.

Ausführungsbeispiele der Erfindung werden nachfolgend anhand einer Zeichnung näher erläutert. Dabei zeigen:
- FIG 1: in einem Prinzipschaltbild einen DI-Schutzschalt er mit einer Signalaufbereitungs-Schaltung zur Gleichrichtung und Verstärkung einer Eingangsspannung,
- FIG 2: ein Schaltbild der Signalaufbereitungs-Schaltung gemäß FIG 1 mit einem Vollweggleichrichter, einer als invertierender Verstärker ausgebildeten Verstärkerschaltung und einem als Spannungsfolger ausgebildeten Versorgungsmodul,
- FIG 3: eine alternative Ausführung der Verstärkerschaltung gemäß FIG 2, und
- FIG 4 und 5: alternative Ausführungen des Versorgungsmoduls gemäß FIG 2.

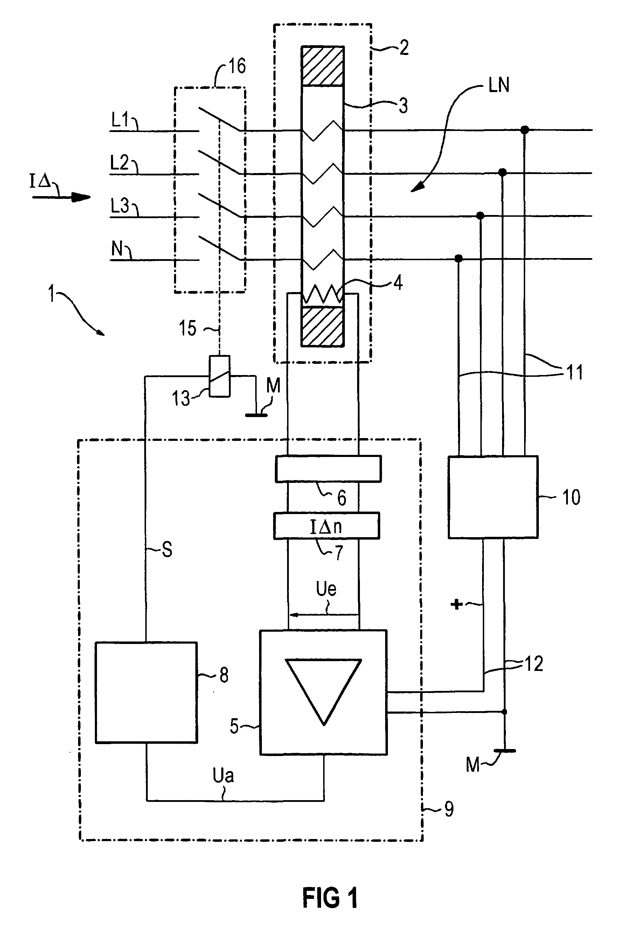

Der in FIG 1 dargestellte DI-Schutzschalter 1 umfaßt einen Summenstromwandler 2 mit einem Wandlerkern 3, durch welchen die drei Phasenleiter Li, i = 1,2,3, sowie der Nullleiter N eines 4-Leiternetzes LN geführt sind. Der DI-Schutzschalter 1 ist dabei einem (nicht dargestellten) elektrischen Verbraucher vorgeschaltet, welcher aus dem Leiternetz LN mit Strom versorgt wird.

Der Wandlerkern 3 ist des Weiteren mit einer Sekundärwicklung 4 versehen, welche mit einer Signalaufbereitungs-Schaltung 5 verbunden ist. Im störungsfreien Betrieb des Leiternetzes LN ist die Summe der durch den Wandlerkern 3 fließenden Ströme stets Null. Eine Störung tritt dann auf, wenn - z.B. infolge eines Leckstroms - ein Teil des zugeführten Stromes verbraucherseitig über Erde abgeführt wird. In diesem Fall ergibt die Summe der durch den Wandlerkern 3 fließenden Ströme einen von Null verschiedenen Betrag. Dieser Differenzstrom oder Fehlerstrom IΔ induziert in der Sekundärwicklung 4 ein als Maß für den Fehlerstrom IΔ dienendes Spannungssignal, welches als Eingangsspannung Ue der Signalaufbereitungs-Schaltung 5 zugeführt wird. Der Sekundärwicklung 4 und der Signalaufbereitungs-Schaltung 5 sind ein Überspannungsschutz 6 sowie eine veränderliche Bürde 7 zwischengeschaltet. Mittels der Bürde 7 kann der Nennfehlerstrom IΔn des DI-Schutzschalters 1 innerhalb eines vorgegebenen Bereiches variiert werden. Der Nennfehlerstrom IΔn ist ein Maß für die Auslöseempfindlichkeit des DI-Schutzschalters 1.

Die Eingangsspannung Ue wird innerhalb der Signalaufbereitungs-Schaltung 5 gleichgerichtet und verstärkt. Die Signalaufbereitungs-Schaltung 5 wandelt die Eingangsspannung Ue in eine gleichgerichtete und verstärkte Ausgangsspannung Ua um. Diese Ausgangsspannung Ua wird einer nachgeschalteten Auswerte- und Ansteuerschaltung 8 zugeleitet. Die Auswerte- und Ansteuerschaltung 8, die Signalaufbereitungs-Schaltung 5 sowie die Bürde 7 und der Überlastschutz 8 werden zusammenfassend als Auslösekreis-Elektronik 9 bezeichnet.

Zum Betrieb der Auslösekreis-Elektronik 9, insbesondere der Signalaufbereitungs-Schaltung 5 und der Auswerte- und Ansteuerschaltung 8 wird der DI-Schutzschalter 1 - im Gegensatz zu einem netzspannungsunabhängigen FI-Schutzschalter - über ein Netzteil 10 mit Strom versorgt. Das Netzteil 10 ist zu diesem Zweck über Versorgungsleitungen 11 an die Leiter Li,N des Leiternetzes LN angeschlossen. Das Netzteil 10 stellt der Signalaufbereitungs-Schaltung 5 über Verbindungsleitungen 12 eine bezogen auf Massepotential M positive Betriebsspannung (+) zur Verfügung.

Die Ausgangsspannung Ua wird innerhalb der Auswerte- und Ansteuerschaltung 8 bewertet. Erfüllt die Ausgangsspannung Ua hinsichtlich ihrer Amplitude und/oder ihrer Fortdauer eine vorgegebene Auslösebedingung, so gibt die Auswerte- und Ansteuerschaltung 8 ein Auslösesignal S an das ausgangsseitig mit Massepotential M verbundene Auslöserelais 13 ab. Das Auslöserelais 13 betätigt daraufhin eine Schaltmechanik 15, welche die Schaltkontakte eines auf alle Leiter Li,N des Leiternetzes LN wirkenden Schalters 16 öffnet.

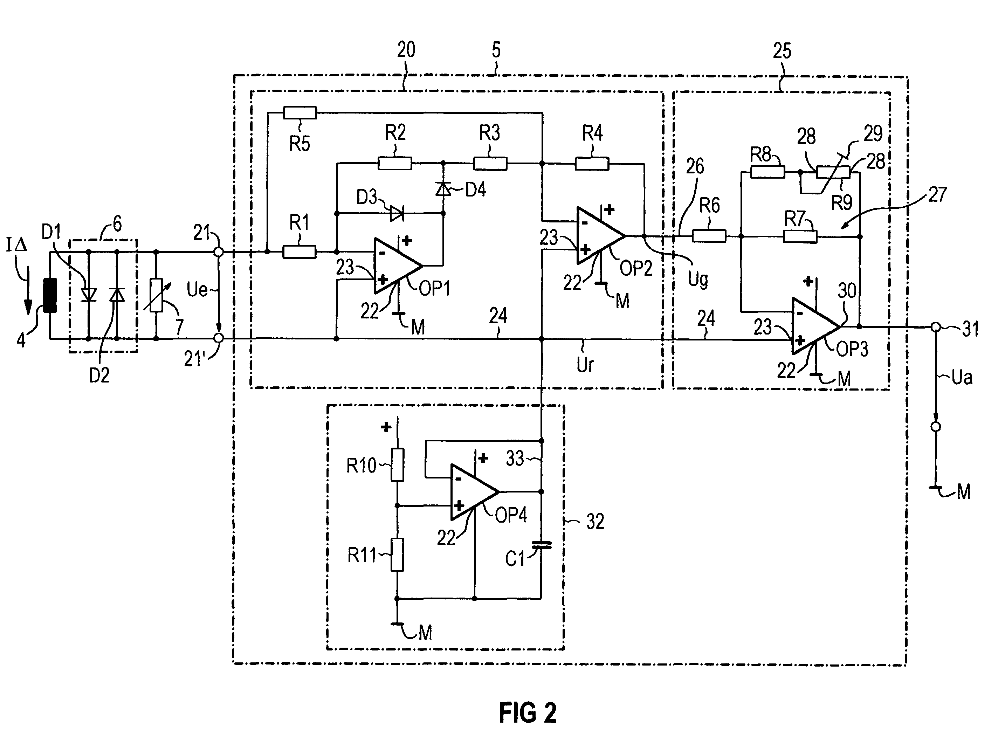

In FIG 2 ist eine schaltungstechnische Realisierung der Signalaufbereitungs-Schaltung 5 dargestellt. Der der Sekundärwicklung 4 parallel geschaltete Überspannungsschutz 6 umfaßt zwei antiparallel geschaltete Dioden D1 und D2, insbesondere Siliziumdioden. Diese Dioden D1,D2 begrenzen die Eingangsspannung Ue auf einen Maximalbetrag von ca. 0,6V.

Die dem Überspannungsschutz 6 parallel geschaltete Bürde 7 ist als veränderlicher ohmscher Widerstand realisiert. Zur Einstellung eines gewünschten Nennfehlerstroms IΔn wird an der Bürde 7 ein korrespondierender Widerstandswert festgelegt. Die von einem Fehlerstrom IΔ hervorgerufene Eingangsspannung Ue ist dabei hinsichtlich ihrer Amplitude um so größer, je größer der an der Bürde 7 eingestellte Widerstandsbetrag ist. Der DI-Schutzschalter 1 reagiert somit bei hochohmig eingestellter Bürde 7 empfindlicher auf einen auftretenden Fehlerstrom IΔ als bei einer niederohmigeren Bürde 7. Mit anderen Worten: Eine hochohmige Bürde 7 entspricht einem niedrigen Nennfehlerstrom IΔn, während eine niederohmige Bürde 7 einem großen Nennfehlerstrom IΔn entspricht.

Die Signalaufbereitungs-Schaltung 5 umfaßt einen aktiven Vollweggleichrichter 20, an dessen Eingangskontakten 21,21' die Eingangsspannung Ue anliegt. Der Vollweggleichrichter 20 enthält zwei invertierend betriebene Operationsverstärker OP1 und OP2, die mit den Widerständen R1,R2,R3,R4,R5 sowie den Dioden D3,D4 beschaltet sind. Der Aufbau und die Funktionsweise des Vollweggleichrichters 20 ist in Tietze/Schenk, Seite 787 beschrieben. Abweichend von der dort dargestellten Schaltung liegen die negativen Betriebsspannungsanschlüsse 22 der Operationsverstärker OP1,OP2 auf Massepotential M. Des Weiteren sind die P-Eingänge 23 der Operationsverstärker OP1,OP2 mit einer gemeinsamen Potentialleitung 24 verbunden. Diese Potentialleitung 24 ist außerdem über den Eingangskontakt 21' mit der Sekundärwicklung 4 verbunden. Die Potentialleitung 24 führt dabei eine Referenzspannung Ur, deren Betrag zwischen Massepotential M und der positiven Betriebsspannung (+) liegt. Der Vollweggleichrichter 20 gibt eine gleichgerichtete Spannung Ug aus, die gegenüber dem Betrag der Eingangsspannung Ue um einen Verstärkungsfaktor Vgl verstärkt ist.

Dem Vollweggleichrichter 20 ist eine Verstärkerschaltung 25 nachgeschaltet. Dieser Verstärkerschaltung 25 wird über eine Leitung 26 die gleichgerichtete Spannung Ug zugeführt. Die Verstärkerschaltung 25 ist als invertierender Verstärker ausgeführt und umfaßt einen Operationsverstärker OP3, die Widerstände R6,R7,R8 sowie ein Potentiometer R9. Um eine Einstellung des Verstärkungsfaktors V der Verstärkerschaltung 25 zu ermöglichen, sind die Widerstände R6,R7,R8 sowie das Potentiometer R9 in einer Abgleichschaltung 27 angeordnet, bei der Operationsverstärker OP3 durch eine Parallelschaltung des Widerstandes R7 mit einer Reihenschaltung des Potentiometers R9 und des Widerstandes R8 gegengekoppelt ist. Der Widerstand R6 ist eingangsseitig dieser Parallelschaltung in Reihe vorgeschaltet. Der mittels dieser Abgleichschaltung 27 einstellbare Maximalwert Vmax des Verstärkungsfaktors V hat den Betrag Vmax = [(R8 + R9) x R7 /(R8 + R9 + R7)]/R6, wobei für R9 der zwischen den Endabgriffen 28 des Potentiometers R9 gemessene Widerstandsbetrag einzusetzen ist. Der Minimalwert Vmin des Verstärkungsfaktors V hat den Betrag Vmax = [R8 x R7 /(R8 + R7)]/R6. In diesem Fall ist das Potentiometer R9 über den Potentiometerschleifer 29 kurzgeschlossen. Die Widerstände R6,R7,R8 und das Potentiometer R9 sind derart dimensoniert, daß das Verhältnis Vmax/Vmin einen Grenzwert von 1,5 nicht überschreitet. Infolge dieser Begrenzung können Toleranzen des Summenstromwandlers 2 ausgeglichen werden, wobei gleichzeitig eine überempfindliche Einstellung des DI-Schutzschalters 1 ausgeschlossen ist. Dies ist insbesondere bei einem Ausfall des Potentiometerschleifers 29 durch Unterbrechung des elektrischen Kontaktes von Vorteil. In diesem Fall liegen ausschließlich die Endabgriffe 28 des Potentiometers R9 an Spannung, so daß der Maximalwert Vmax des Verstärkungsfaktors nicht überschritten wird.

Der Verstärkerausgang 30 des Operationsverstärkers OP3 ist mit einem Ausgangskontakt 31 der Signalaufbereitungs-Schaltung 5 verbunden, an dem die Ausgangsspannung Ua gegen Massepotential M abgreifbar ist. Analog zu den Operationsverstärkern OP1 und OP2 liegt der negative Betriebsspannungsanschluss 22 des Operationsverstärkers OP3 auf Massepotential M, während der P-Eingang 23 des Operationsverstärkers OP3 an die die Referenzspannung Ur führende Potentialleitung 24 angeschlossen ist.

Um einen Betrieb des Operationsverstärkers OP2 in Sättigung und damit eine Fehlauslösung des DI-Schutzschalters 1 bei einem kurzzeitigen hohen Ableitstrom bzw. Stoßstrom zu vermeiden, sind der Vollweggleichrichter 20 und der Überspannungsschutz 6 aufeinander abgestimmt. Der Überspannungsschutz 6 ist dabei hinsichtlich seiner Stoßansprechspannung û derart dimensioniert, dass das Produkt aus der Stoßansprechspannung û und dem Verstärkungsfaktor Vgl des Vollweggleichrichters 20 die baulich bedingte maximale Aussteuerbarkeit U° des verwendeten Operationsverstärker-Typs nicht übersteigt (ü x V ≤ U°). Zur Vermeidung eines absinkenden Verstärkungsfaktors Vgl des Vollweggleichrichters 20 bei hohen Umgebungstemperaturen sind die Dioden D3,D4 ferner derart dimensioniert, daß ihr Sperrstrom Ir bei einer Bauteiltemperatur von 100 °C einen Betrag von 200nA nicht übersteigt. Dies ermöglicht eine bevorzugte hochohmige Dimensionierung des Eingangswiderstandes des Vollweggleichrichters 20 auf einen Betrag von mindestens 10 kΩ. Dieser hohe Eingangswiderstand ist für die Erfassung kleiner Fehlerströme insofern vorteilhaft, als die Sekundärwicklung 4 durch den Eingangswiderstand nur in vernachlässigbarem Maß belastet ist.

Zur Bereitstellung der Referenzspannung Ur umfaßt die Signalaufbereitungs-Schaltung 5 ein Versorgungsmodul 32. Das Versorgungsmodul 32 ist dabei in Form eines herkömmlichen Spannungsfolgers ausgebildet und enthält einen mit den Widerständen R10 und R11 beschalteten Operationsverstärker OP4. Dabei liegen der Widerstand R11 und der negative Betriebsspannungsanschluss 22 des Operationsverstärkers OP4 wiederum auf Massepotential M. In bekannter Weise wird durch das Verhältnis der Widerstände R10,R11 der Betrag der Referenzspannung Ur eingestellt. Die Referenzspannung Ur ist dabei über eine Ausgangsleitung 33 des Versorgungsmoduls 32 an die Potentialleitung 24 angelegt. Aus Gründen der elektro-magnetischen-Verträglichkeit ist zwischen die Ausgangsleitung 33 und Massepotential M ein Kondensator C1 geschaltet.

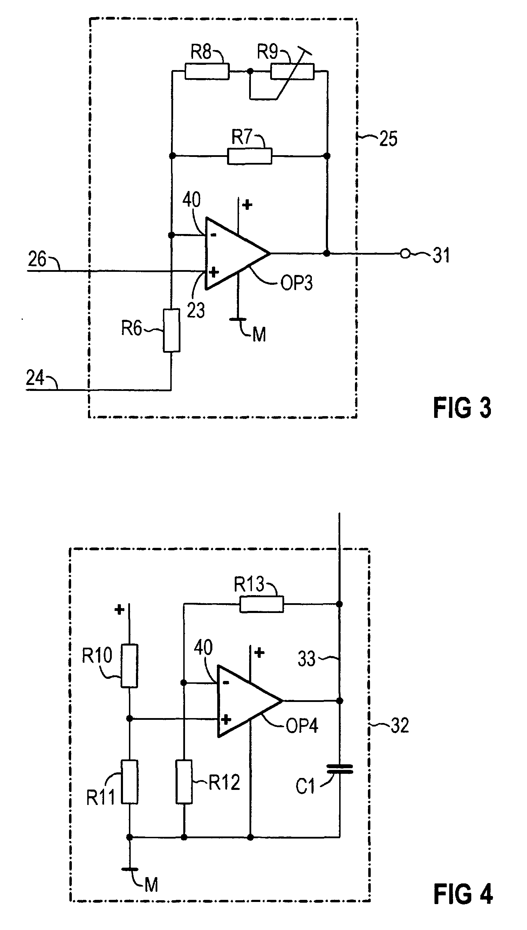

FIG 3 zeigt die Verstärkerschaltung 25 in einer Ausbildung als nicht-invertierender Verstärker. Hierbei ist die Leitung 26 direkt auf den P-Eingang 23 des Operationsverstärkers OP3 gelegt, während die Abgleichschaltung 27 mit dem N-Eingang 40 des Operationsverstärkers OP3 verbunden ist.

In einer Ausführungsform gemäß FIG 4 ist das Versorgungsmodul 32 als nicht-invertierender Verstärker mit einem Verstärkungsfaktor größer als 1 ausgeführt. Im Gegensatz zu der Ausführung gemäß FIG 2 ist dabei der N-Eingang 40 des Operationsverstärkers OP4 mit zwei als Spannungsteiler geschalteten Widerständen R12 und R13 beschaltet. Diese Ausführungsform ist besonders stabil gegenüber unerwünschten Schwankungen der Referenzspannung Ur, die sich infolge von Kopplungseffekten des Operationsverstärkers OP4 mit dem Kondensator C1 ergeben.

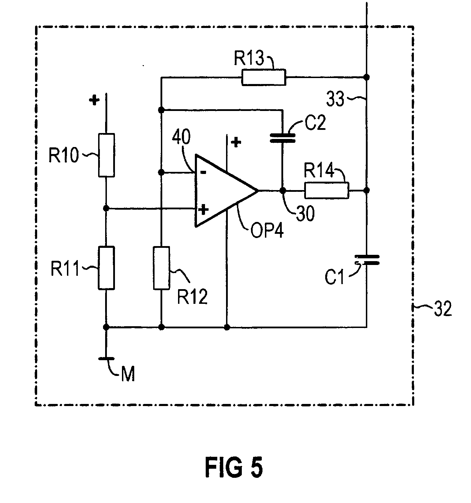

In einer bevorzugten Weiterbildung des Versorgungsmoduls 32 ist gemäß FIG 5 zusätzlich eine Frequenzgang-Korrektur vorgesehen. Dazu ist zwischen den Verstärkerausgang 30 des Operationsverstärker OP4 und dessen N-Eingang 40 ein Kondensator C2 geschaltet. Des Weiteren ist zwischen den Verstärkerausgang 30 des Operationsverstärkers OP4 und die Ausgangsleitung 33 ein Widerstand R14 geschaltet.

## Patentansprüche

1. Fehlerstrom-Schutzeinrichtung mit einem Summenstromwandler (2), dem sekundärseitig über eine Signalaufbereitungs-Schaltung (5) ein Auslöserelais (13) zur Betätigung eines Schalters (16) im angeschlossenen Leiternetz (LN) nachgeschaltet ist, wobei die Signalaufbereitungs-Schaltung (5) eine von der Sekundärwicklung (4) des Summenstromwandlers (2) angelegte Eingangsspannung (Ue) bipolar gleichrichtet und verstärkt, wobei der Sekundärwicklung (4) und der Signalaufbereitungs-Schaltung (5) eine gemeinsame Referenzspannung (Ur) zugeführt ist, wobei die Signalaufbereitungs-Schaltung (5) einen aus zwei gekoppelten Operationsverstärkern (OP1,OP2) aufgebauten aktiven Vollweggleichrichter (20) umfasst,
**dadurch gekennzeichnet, dass**
die Referenzspannung (Ur) betragsmäßig zwischen Massepotential (M) und einer Betriebsspannung (+) liegt und durch einen Operationsverstärker (OP4) erzeugt ist, der auf die positiven Eingänge der Operationsverstärker (OP1,OP2) der Signal-Aufbereitungsschaltung (5) arbeitet.

2. Schutzeinrichtung nach Anspruch 1, **dadurch gekennzeichnet, dass** die Signalaufbereitungs-Schaltung (5) einen dem Vollweggleichrichter (20) nachgeschaltete Verstärkerschaltung (25) mit einer Abgleichschaltung (27) umfasst.

3. Schutzeinrichtung nach Anspruch 2, **dadurch ge-kennzeichnet, dass** innerhalb der Abgleichschaltung (27) ein Potentiometer (R9) derart angeordnet ist, dass der Maximalwert (Vmax) des Verstärkungsfaktors (V) der Verstärkerschaltung (25) höchstens das 1,5-fache des Minimalwerts (Vmin) des Verstärkungsfaktors (V) beträgt, und dass sich bei einem Ausfall des Potentiometerschleifers (29) selbsttätig der Maximalwert (Vmax) einstellt.

4. Schutzeinrichtung nach Anspruch 1, **dadurch ge-kennzeichnet, dass** zur Bereitstellung der Referenzspannung (Ur) ein als nicht-invertierender Verstärker ausgebildetes Versorgungsmodul (32) vorgesehen ist.

5. Schutzeinrichtung nach Anspruch 4, **dadurch gekennzeichnet, dass** das Versorgungsmodul (32) frequenzgangkompensiert ist.

6. Schutzeinrichtung nach einem der Ansprüche 1 bis 4, **da-durch gekennzeichnet, dass** zur Bereitstellung des Referenzpotentials (Ur) ein als Spannungsfolger ausgebildetes Versorgungsmodul (32) vorgesehen ist.

7. Schutzeinrichtung nach einem der Ansprüche 1 bis 6, **dadurch gekennzeichnet, dass** der Signalaufbereitungs-Schaltung (5) ein Überspannungschutz (6) vorgeschaltet ist.

8. Schutzeinrichtung nach Anspruch 7, **dadurch gekennzeichnet, dass** als Überspannungsschutz (6) zwei antiparallel geschaltete Dioden (D1,D2)vorgesehen sind, die zur Signalaufbereitungs-Schaltung (5) parallel geschaltet sind.

9. Schutzeinrichtung nach Anspruch 8, **dadurch ge-kennzeichnet, dass** der Vollweggleichrichter (20) derart dimensioniert ist, daß die mit dem Verstärkungsfaktor (Vgl) des Vollweggleichrichters (20) multiplizierte Stoßansprechspannung (û) des Überspannungsschutzes (6) die maximale Ausgangsaussteuerbarkeit (U°) des ausgangsseitigen Operationsverstärkers (OP2) des Vollweggleichrichters (20) nicht übersteigt.

10. Schutzeinrichtung nach einem der Ansprüche 1 bis 9, **dadurch gekennzeichnet, dass** die Signalaufbereitungs-Schaltung (5) mit Dioden (D3,D4) versehen sind, deren Sperrstrom (Ir) bei einer Bauteiltemperatur von 100°C einen Betrag von 200 nA nicht überschreitet.

## Claims

1. Fault current protection device with a summation current transformer (2), to which a triggering relay (13) is connected on the secondary side via a signal processing circuit (5) for actuating a switch (16) in a connected line network (LN), with the signal processing circuit (5) performing bipolar rectification and amplification of an input voltage (Ue) applied from the secondary winding (4) of the summation current transformer (2), with the secondary winding (4) and the signal processing circuit (5) being fed a common reference voltage (Ur), with the signal processing circuit (5) comprising an active full-wave rectifier (20) consisting of two coupled operational amplifiers (OP1, OP2),
**characterized in that**
the reference voltage (Ur) lies roughly between ground potential (M) and an operating voltage (+) and is generated by an operational amplifier (OP4) which operates on the positive inputs of the operational amplifier (OP1,OP2) of the signal processing circuit (5).

2. Protective device according to Claim 1, **characterized in that** the signal processing circuit (5) comprises an amplifier circuit (25) with a compensation circuit (27) connected downstream from the full-wave rectifier (20).

3. Protective device according to Claim 2, **characterized in that**, within the compensation circuit (27) a potentiometer (R9) is arranged such that the maximum value (Vmax) of the amplification factor (V) of the amplifier circuit (25) is at most 1.5 times the minimum value (Vmin) of the amplification factor (V), and that if the potentiometer slider (29) fails, the maximum value is set automatically (Vmax).

4. Protective device according to Claim 1, **characterized in that**, to provide the reference voltage (Ur), a supply module (32) embodied as a non-inverting amplifier is provided.

5. Protective device according to Claim 4, **characterized in that** the supply module (32) is frequency response-compensated.

6. Protective device in accordance with one of the Claims 1 to 4, **characterized in that**, to provide the reference voltage (Ur), a supply module (32) embodied as a voltage follower is provided.

7. Protective device in accordance with one of the claims 1 to 6, **characterized in that** an overvoltage protection (6) is connected upstream from the signal processing circuit (5).

8. Protective device according to Claim 7, **characterized in that** two antiparallel switched diodes (D1,D2) are provided as overvoltage protection (6) which are switched in parallel to the signal processing circuit (5).

9. Protective device according to Claim 8, **characterized in that** the full-wave rectifier (20) is dimensioned such that the activation voltage (ü) of the overvoltage protection (6) multiplied by the amplification factor (Vgl) of the full-wave rectifier (20) des not exceed the maximum output controllability (U°) of the output-side operational amplifier (OP2) of the full-wave converter (20).

10. Protective device according to one of the Claims 1 to 9, **characterized in that** the signal processing circuit (5) is provided with diodes (D3,D4) of which the blocking current (Ir) at a component temperature of 100°C does not exceed an amount of 200 nA.

## Revendications

1. Dispositif de protection contre des courants de défaut, comportant un transformateur de courant cumulé (2) du côté aval duquel un relais déclencheur (13) est branché du côté secondaire par l'intermédiaire d'un circuit de préparation de signal (5) en vue de l'actionnement d'un interrupteur (16) dans le réseau de conducteurs (LN) raccordé, le circuit de préparation de signal (5) redressant de manière bipolaire et amplifiant une tension d'entrée (Ue) appliquée par l'enroulement secondaire (4) du transformateur de courant cumulé (2), une tension de référence commune (Ur) étant envoyée à l'enroulement secondaire (4) et au circuit de préparation de signal (5), le circuit de préparation de signal (5) comprenant un redresseur à pleine onde (20) actif construit à partir de deux amplificateurs opérationnels (OP1, OP2) couplés,
**caractérisé par le fait que** la tension de référence (Ur) est comprise en valeur absolue entre le potentiel de masse (M) et une tension de fonctionnement (+) et est produite par un amplificateur opérationnel (OP4) qui travaille sur les entrées positives des amplificateurs opérationnels (OP1, OP2) du circuit de préparation de signal (5).

2. Dispositif de protection selon la revendication 1, **caractérisé par le fait que** le circuit de préparation de signal (5) comprend un circuit amplificateur (25) qui comporte un circuit d'équilibrage (27) et qui est branché du côté aval du redresseur à pleine onde (20).

3. Dispositif de protection selon la revendication 2, **caractérisé par le fait qu'**un potentiomètre (R9) est placé à l'intérieur du circuit d'équilibrage (27), de telle sorte que la valeur maximale (Vmax) du facteur d'amplification (V) du circuit amplificateur (25) vaut au maximum 1,5 fois la valeur minimale (Vmin) du facteur d'amplification (V), et que, en cas de panne du curseur de potentiomètre (29), la valeur maximale (Vmax) s'installe automatiquement.

4. Dispositif de protection selon la revendication 1, **caractérisé par le fait qu'**un module d'alimentation (32) conçu comme un amplificateur n on inverseur est prévu pour fournir la tension de référence (Ur).

5. Dispositif de protection selon la revendication 4, **caractérisé par le fait que** le module d'alimentation (32) a une réponse fréquentielle compensée.

6. Dispositif de protection selon l'une des revendications 1 à 4, **caractérisé par le fait qu'**un module d'alimentation (32) conçu comme un étage suiveur en tension est prévu pour fournir le potentiel de référence (Ur).

7. Dispositif de protection selon l'une des revendications 1 à 6, **caractérisé par le fait qu'**un dispositif de protection contre les surtensions (6) est branché du côté amont du circuit de préparation de signal (5).

8. Dispositif de protection selon la revendication 7, **caractérisé par le fait que** deux diodes (D1, D2) branchées tête-bêche et en parallèle avec le circuit de préparation de signal (5) sont prévues comme dispositif de protection contre les surtensions (6).

9. Dispositif de protection selon la revendication 8, **caractérisé par le fait que** le redresseur à pleine onde (20) est dimensionné de telle sorte que la tension de réponse aux chocs (û) du dispositif de protection contre les surtensions (6) multipliée par le facteur d'amplification (Vgl) du redresseur à pleine onde (20) ne dépasse pas la possibilité de commande maximale en sortie (U°) de l'amplificateur opérationnel côté sortie (OP2) du redresseur à pleine onde (20).

10. Dispositif de protection selon l'une des revendications 1 à 9, **caractérisé par le fait que** le circuit de préparation de signal (5) est muni de diodes (D3, D4) dont le courant à l'état bloqué (Ir) pour une température de composant de 100 °C ne dépasse pas une valeur de 200 nA.
